# EUROPÄISCHE PATENTSCHRIFT

(11) **EP 3 025 203 B1**
(45) Veröffentlichungstag und Bekanntmachung des Hinweises auf die Patenterteilung: **22.12.2021**
(21) Anmeldenummer: 14744305.5
(22) Anmeldetag: 24.07.2014
(51) Int. Cl.: G05B 19/418, G05B 19/042, G05B 23/02

(54) **SYSTEM, GERÄT UND VERFAHREN ZUR BEREITSTELLUNG RELEVANTER GERÄTEINFORMATIONSDATEN FÜR EIN ENERGIEGERÄT**
SYSTEM, DEVICE AND METHOD FOR PROVIDING RELEVANT DEVICE INFORMATION DATA FOR AN ENERGY DEVICE
SYSTÈME, APPAREIL ET PROCÉDÉ D'ACQUISITION DE DONNÉES INFORMATIVES RELATIVES À L'APPAREIL POUR UN APPAREIL ÉNERGÉTIQUE

(30) Priorität: 25.07.2013 AT 5992013
(43) Veröffentlichungstag der Anmeldung: 01.06.2016
(73) Patentinhaber: Fronius International GmbH, 4643 Pettenbach (AT)
(72) Erfinder: NIEDEREDER, Franz, A-4652 Fischlham (AT); DIETRICH, Michael, A-4614 Marchtrenk (AT); NEUBACHER, Günther, A-4671 Neukirchen bei Lambach (AT)
(74) Vertreter: Isarpatent
(86) Internationale Anmeldenummer: PCT/EP2014/065873
(87) Internationale Veröffentlichungsnummer: WO 2015/011215

(56) Entgegenhaltungen:
- DE-A1-102007 039 531
- US-A1- 2012 303 323
- None

## Beschreibung

Die Erfindung betrifft ein Energiebereitstellunggerät zur Bereitstellung elektrischer Energie für einen Schweißbrenner.

Geräte zur Gewinnung, Speicherung oder Bereitstellung elektrischer Energie werden nach ihrer Auslieferung zum Kunden an ihrem Einsatzort aufgestellt und in Betrieb genommen. Bei der Inbetriebnahme konventioneller Energiegeräte müssen in vielen Fällen durch einen Nutzer verschiedene Inbetriebnahmeschritte, gegebenenfalls Konfigurationen, vorgenommen werden. Dies geschieht üblicherweise mit Hilfe von mitgelieferten Bedienungsanleitungen. Weiterhin kann es bei der Aufstellung von derartigen Energiegeräten bei deren Inbetriebnahme zu Fehleinstellungen bzw. Fehlkonfigurationen seitens des Nutzers kommen, die entsprechende Fehlermeldungen auslösen. Diese Fehlermeldungen werden, sofern das Energiegerät über eine integrierte oder anschließbare Anzeige verfügt, in der Regel auf dieser Anzeige des Energiegerätes beispielsweise in einer entsprechenden Fehlermeldung angezeigt. Beispielsweise gibt der angezeigte Fehler eine Fehlernummer oder dergleichen an. In der mitgelieferten Bedienungsanleitung können Angaben enthalten sein, wie ein derartiger Fehler seitens des Nutzers bzw. des Servicetechnikers vor Ort behandelt werden soll. Falls es dem Nutzer bzw. dem Servicetechniker nicht gelingt, anhand der in der Bedienungsanleitung angegebenen Routine den an dem Energiegerät aufgetretenen Fehler zu beheben, wird üblicherweise der Gerätehersteller oder Gerätehändler von dem Nutzer telefonisch oder schriftlich kontaktiert. Beispielsweise kann seitens des Nutzers eine Service-Hotline des Geräteherstellers und/oder des Gerätehändlers angerufen werden. Bei entsprechender Auslastung der Hotline-Servicezentrale kann es dabei vorkommen, dass ein Nutzer bzw. Service-Techniker in einer Warteschleife längere Zeit warten muss, bis er mit einem zuständigen Techniker, der mit dem entsprechenden Energiegerät vertraut ist, telefonisch verbunden wird. In vielen Fällen werden Energiegeräte, beispielsweise zur Gewinnung von elektrischer Energie aus Sonneneinstrahlung durch Nutzer in privaten Eigenheimen eingesetzt. Derartige Nutzer verfügen in vielen Fällen nicht über die notwendige technische Expertise, um den aufgetretenen Fehler einem in der Service-Zentrale tätigen Techniker genau zu beschreiben. Daher kommt es in vielen Fällen vor, dass unerfahrene Nutzer erst nach mehrfachen Weiterverbindungen mit dem tatsächlich zuständigen Techniker verbunden werden, welcher ihre Fragen hinsichtlich der Fehlerbehandlung beantworten kann.

Aus der Druckschrift US 2012/0303323 A1 ist ein Selbstdiagnose-System für ein Haushaltgerät bekannt, wobei das Haushaltsgerät bei Erkennung eines Fehlers ein Signal anzeigt, welches mit einem Anwendergerät ausgelesen und zur weiteren Analyse an einen Server übertragen werden kann. Die Druckschrift DE 2007 039 531 A1 offenbart ein Verfahren zum Beschaffen von instandhaltungsrelevanten Informationen.

Ein weiterer Nachteil der herkömmlichen Vorgehensweise besteht darin, dass in vielen Fällen Nutzer den Fehler nicht nur lückenhaft beschreiben, sondern auch den Gerätetyp verwechseln oder eine angezeigte Gerätenummer falsch ablesen. Daher kann es vorkommen, dass ein über die Service-Hotline kontaktierter Techniker des Geräteherstellers von einem falschen Gerätetyp und/oder einer falschen Fehlernummer und/oder einer falschen Gerätenummer bei seiner Beratung zur Handhabung des Fehlers ausgeht. Dies kann beispielsweise dazu führen, dass Angaben des Technikers nicht zu einer Behebung des Fehlers führen, so dass das Gerät weiterhin funktionsuntüchtig bleibt. In diesen Fällen ist es meist notwendig, dass ein Techniker des Geräteherstellers und/oder Gerätehändlers sich zu dem Aufstellungsort des Endgerätes beim Nutzer begibt und dort vor Ort den Fehler behebt. Weiterhin kommt es in vielen Fällen vor, dass aufgrund von Verwechslungen falsche Ersatzteile für einen anderen Gerätetyp bzw. eine andere Geräteversion an den Nutzer bzw. Kunden geliefert werden. Hierdurch verzögert sich die Fehlerbehebung weiter. Die herkömmliche Vorgehensweise bei der Inbetriebnahme und/oder Fehlerbehandlung bei Energiegeräten sind somit ihrerseits relativ fehleranfällig und führt in vielen Fällen zur erheblichen Verzögerungen bei der Fehlerbehebung an dem aufgestellten Energiegerät. Darüber hinaus ist der Aufwand zur Bereitstellung der notwendigen Informationen und Unterstützung der Installation und/oder Fehlerbehebung relativ hoch, so dass beispielsweise eine ständig verfügbare Service-Hotline vorhanden sein muss.

Es ist daher eine Aufgabe der vorliegenden Erfindung, ein Energiebereitstellungsgerät, ein Verfahren und ein System zum Bereitstellen von relevanten Geräteinformationsdaten für ein Energiebereitstellungsgerät zu schaffen, durch das ein Nutzer bei der Aufstellung, Inbetriebnahme, Bedienung sowie Fehlerbehandlung effizient und zuverlässig unterstützt wird.

Diese Aufgabe wird erfindungsgemäß durch ein Energiebereitstellungsgerät mit den in Patentanspruch 1 angegebenen Merkmalen gelöst.

Die Ausgabeeinheit ist bei einer möglichen Ausführungsform in dem Energiebereitstellungsgerät integriert. Bei einer alternativen Ausführungsform ist die Ausgabeeinheit an eine Schnittstelle des Energiebereitstellungsgerätes angeschlossen.

Die Kontextdaten des Energiebereitstellungsgerätes weisen interne Kontextdaten und externe Kontextdaten auf.

Diese Kontextdaten sind in einem Kontextdatenspeicher des Energiebereitstellungsgerätes gespeichert, wobei die Code-Generierungseinheit Zugriff auf den Kontextdatenspeicher zur Generierung des Codes in Abhängigkeit der aus dem Kontextdatenspeicher ausgelesenen Kontextdaten hat.

In einer möglichen Ausführungsform des erfindungsgemäßen Energiebereitstellungsgerätes weisen die internen Kontextdaten gerätespezifische Kontextdaten auf.

Diese gerätespezifischen Kontextdaten umfassen vorzugsweise eine Gerätetyp des Energiebereitstellungsgerätes, eine Geräte-ID des Energiebereitstellungsgerätes und insbesondere eine Hersteller-ID oder eine Seriennummer des Energiebereitstellungsgerätes, voreingestellte oder konfigurierbare Geräteparameter des Energiebereitstellungsgerätes, eine aktuelle Geräteeinstellung oder Materialbestückung des Energiebereitstellungsgerätes und/oder eine Netzwerkadresse des Geräteherstellers des jeweiligen Energiebereitstellungsgerätes.

Die externen Kontextdaten, welche in dem Kontextdatenspeicher des Energiebereitstellungsgerätes gespeichert sind, weisen vorzugsweise umgebungsspezifische Kontextdaten auf, insbesondere eine geographische Position des Energiebereitstellungsgerätes. Die externen Kontextdaten weisen nutzerspezifische Kontextdaten auf, insbesondere Daten hinsichtlich dessen Muttersprache und/oder dessen Qualifikation zur Bedienung des Energiebereitstellungsgerätes .

In einer weiteren möglichen Ausführungsform des erfindungsgemäßen Energiebereitstellungsgerätes werden Kontextdaten durch Sensoren des Energiebereitstellungsgerätes automatisch erfasst und/oder über eine Nutzerschnittstelle des Energiebereitstellungsgerätes oder über eine drahtlose Schnittstelle eines mit dem Energiebereitstellungsgerät verbundenen mobilen Endgerätes von dem Nutzer eingegeben.

In einer möglichen Ausführungsform des erfindungsgemäßen Energiebereitstellungsgerätes weist die integrierte oder angeschlossene Ausgabeeinheit des Energiebereitstellungsgerätes eine optische Anzeigeeinheit auf, die einen dynamisch generierten zweidimensionalen optischen Code anzeigt.

Dieser dynamisch generierte zweidimensionale optische Code wird vorzugsweise durch eine Kamera des mobilen Endgerätes erfasst.

In einer möglichen Ausführungsform ist der dynamisch generierte optische zweidimensionale Code, welcher durch die optische Anzeigeeinheit angezeigt und durch die Kamera des mobilen Endgerätes erfasst wird, ein QRCode.

In einer weiteren möglichen Ausführungsform des erfindungsgemäßen Energiebereitstellungsgerätes weist die Ausgabeeinheit eine akustische Ausgabeeinheit auf, die einen dynamisch generierten akustischen Code bzw. Tonsequenz ausgibt, die durch ein Mikrophon des mobilen Endgerätes des Nutzers erfasst werden kann.

In einer weiteren möglichen Ausführungsform des erfindungsgemäßen Energiebereitstellungsgerätes baut das mobile Endgerät des Nutzers nach erfolgreicher Entschlüsselung des erfassten Codes automatisch über ein Netzwerk eine Datenverbindung zu einem Server auf, der Geräteinformationsdaten bereitstellt, die für das Energiebereitstellungsgerät für den in den Kontextdaten angegebenen Kontext relevant sind.

Bei dem Server kann es sich in einer möglichen Ausführungsform um einen Server des Geräteherstellers oder des Gerätehändlers handeln.

In einer weiteren möglichen Ausführungsform des erfindungsgemäßen Energiebereitstellungsgerätes werden die von dem Server bereitgestellten relevanten Geräteinformationsdaten über das Netzwerk an das mobile Endgerät des Nutzers übertragen.

In einer weiteren möglichen Ausführungsform des erfindungsgemäßen Energiebereitstellungsgerätes werden die von dem mobilen Endgerät des Nutzers von dem Server über das Netzwerk empfangenen relevanten Geräteinformationsdaten des Energiebereitstellungsgerätes durch eine Datenverarbeitungseinheit des mobilen Endgerätes aufbereitet oder direkt auf einem Display des mobilen Endgerätes dem Nutzer angezeigt.

In einer weiteren möglichen Ausführungsform des erfindungsgemäßen Energiebereitstellungsgerätes werden die von dem Server empfangenen relevanten Geräteinformationsdaten zumindest teilweise von dem mobilen Endgerät an das Energiebereitstellungsgerät über eine drahtlose Schnittstelle weitergeleitet. Somit kann beispielsweise das Endgerät dem Energiebereitstellungsgerät Daten aus dem Internet zur Verfügung stellen.

In einer weiteren möglichen Ausführungsform des erfindungsgemäßen Energiebereitstellungsgerätes werden die von dem mobilen Endgerät über die drahtlose Schnittstelle an das Energiebereitstellungsgerät weitergeleiteten relevanten Geräteinformationsdaten auf der optischen Anzeigeeinheit des Energiebereitstellungsgerätes dem Nutzer angezeigt und/oder über die akustische Ausgabeeinheit des Energiebereitstellungsgerätes an den Nutzer akustisch ausgegeben.

In einer weiteren möglichen Ausführungsform des erfindungsgemäßen Energiebereitstellungsgerätes weisen die auf dem Display des mobilen Endgerätes und/oder der optischen Anzeigeeinheit des Energiebereitstellungsgerätes angezeigten relevanten Geräteinformationsdaten eine Bedienungsanleitung zur Einstellung, Bedienung und/oder kontextspezifischen Fehlerbehandlung, Montageanweisungen, Bestückungsanweisungen, Kalibrieranweisungen und/oder Bestellformulare für Ersatzteile auf.

Die Erfindung schafft ferner ein System zur Bereitstellung relevanter Geräteinformationsdaten für ein Energiebereitstellungsgerät mit den im Patentanspruch 9 angegebenen Merkmalen.

Die Erfindung schafft ferner ein Verfahren zum Bereitstellen von relevanten Geräteinformationsdaten für ein Energiebereitstellungsgerät, mit den in Patentanspruch 12 angegebenen Merkmalen.

Im Weiteren werden mögliche Ausführungsformen des erfindungsgemäßen Systems und des erfindungsgemäßen Verfahrens zum Bereitstellen von relevanten Geräteinformationsdaten für ein erfindungsgemäßes Energiebereitstellungsgerät unter Bezugnahme auf die beigefügten Figuren näher beschrieben.

Es zeigen:
- Fig. 1: ein Blockschaltbild zur Darstellung eines Ausführungsbeispiels eines erfindungsgemäßen Systems zur Bereitstellung relevanter Geräteinformationsdaten für ein Energiegerät;
- Fig. 2: ein Ablaufdiagramm zur Darstellung der Ausführungsbeispiels eines erfindungsgemäßen Verfahrens zum Bereitstellen von relevanten Geräteinformationsdaten für ein Energiegerät.

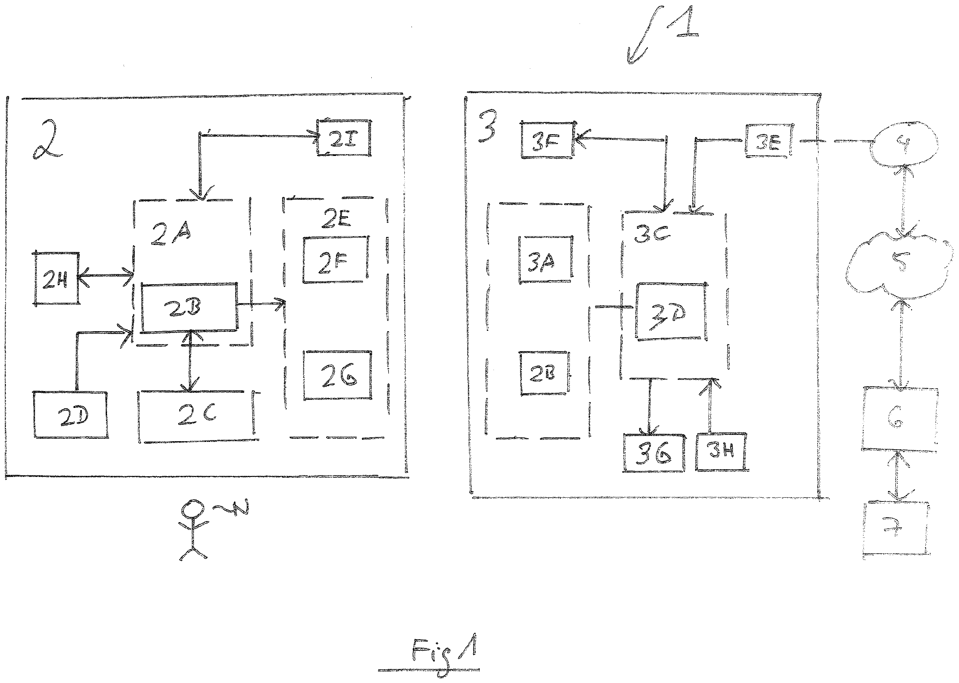

Wie man in der Fig. 1 erkennen kann, umfasst das System 1 zum Bereitstellen relevanter Geräteinformationsdaten für ein Energiegerät 2 ein mobiles Endgerät 3, das über ein Zugangsnetzwerk 4 und ein Datennetzwerk mit einem Systemserver 6 verbunden ist, der beispielsweise Zugriff auf eine Datenbank 7 hat. Bei dem Server 6 kann es sich beispielsweise um den Server des Geräteherstellers des Energiegerätes 2 handeln. Der Server 6 kann auch in dem Energiegerät 2 integriert sein. Bei dem Energiegerät 2 handelt es sich um ein Ener-giebereitstellungsgerät zur Bereitstellung elektrischer Energie für einen Schweißbrenner.

Das Energiegerät 2 verfügt über eine Datenverarbeitungseinheit 2A, die eine oder mehrere Mikroprozessoren umfassen kann. Die Datenverarbeitungseinheit 2A enthält eine Code-Generierungseinheit 2B, welche einen Code in Abhängigkeit von Kontextdaten des Energiegerätes 2 dynamisch generiert. Das Energiegerät 2 enthält einen Kontextdatenspeicher 2C, in dem Kontextdaten des Energiegerätes 2 abgespeichert sind. Der Kontextdatenspeicher 2C kann in dem Energiegerät 2 integriert sein. Weiterhin kann es sich bei dem Kontextdatenspeicher 2C auch um einen austauschbaren Datenträger bzw. um einen USB-Stick oder dergleichen handeln. In einer möglichen Ausführungsform verfügt das Energiegerät 2 über eine Nutzerschnittstelle 2D, über die ein Nutzer bzw. ein Service-Techniker oder eine Privatperson Kontextdaten des Energiegerätes 2 in den Kontextdatenspeicher 2C eingeben kann.

Das Energiegerät 2C verfügt ferner über eine Ausgabeeinheit 2E, welche den dynamisch generierten Code, der von der Code-Generierungseinheit 2B ausgegeben wird, für das mobile Endgerät 3 zur Verfügung stellt. Die Ausgabeeinheit 2E kann bei einer möglichen Ausführungsform eine optische Anzeigeeinheit 2F und/oder eine akustische Ausgabeeinheit 2G aufweisen. Der Code kann auch in einem über eine Schnittstelle mit dem Energiegerät 2 verbundenen Gerät, insbesondere einem PC, Laptop oder Beamer dargestellt werden.

Die Code-Generierungseinheit 2B generiert einen Code in Abhängigkeit von den Kontextdaten, die in dem Kontextdatenspeicher 2C des Energiegerätes 2 abgespeichert sind. Hierzu hat die Code-Generierungseinheit 2B über die Datenverarbeitungseinheit 2A Zugriff auf den Kontextdatenspeicher 2C zur Generierung des Codes in Abhängigkeit der aus dem Kontextdatenspeicher 2C ausgelesenen Kontextdaten. Die Kontextdaten innerhalb des Kontextdatenspeichers 2C können sich dynamisch über die Zeit verändern, insbesondere bei Auftreten eines Fehlers innerhalb des Endgerätes 2, welcher beispielsweise bei der Inbetriebnahme und/oder während des laufenden Betriebs des Energiegerätes 2 auftritt. Es wird also automatisch ein Code aus den aktuellen Kontextdaten generiert und angezeigt, welche der Nutzer aktuell konfiguriert und/oder kontrolliert. Hierbei ist vorausgesetzt, dass eine Generierung des Codes vorgesehen ist.

Die Kontextdaten des Energiegerätes 2 umfassen interne Kontextdaten und externe Kontextdaten. Die internen Kontextdaten weisen beispielsweise gerätespezifische Kontextdaten auf, insbesondere einen spezifischen Gerätetyp bzw. eine Geräteversion des Energiegerätes 2. Weiterhin können die Kontextdaten eine Geräte-ID des Energiegerätes 2, insbesondere eine Hersteller-ID oder eine Seriennummer des Geräteherstellers des Energiegerätes 2 aufweisen. Weiterhin umfassen die internen Kontextdaten, welche in dem Kontextdatenspeicher 2 abgelegt sind, konfigurierbare und weiter optional voreingestellte Geräteparameter des Energiegerätes 2, insbesondere Konfigurationseinstellungen von Parametern des Energiegerätes 2. Die internen Kontextdaten können neben einer aktuellen Geräteeinstellung auch zusätzlich eine momentane Materialbestückung des Energiegerätes 2 angeben, beispielsweise einen in ein Schweißgerät 2 eingelegten Schweißdraht. Darüber hinaus weisen die Kontextdaten vorzugsweise eine Netzwerkadresse, beispielsweise URL, des Servers 6 des Systems 1 auf. Die Netzwerkadresse gibt beispielsweise die Serveradresse des Geräteherstellers des jeweiligen Energiegerätes 2 an.

Neben den internen Kontextdaten sind in dem Kontextdatenspeicher 2C auch externe Kontextdaten enthalten. Diese externen Kontextdaten umfassen beispielsweise umgebungsspezifische Kontextdaten, insbesondere eine geographische Position des Energiegerätes 2 oder die Koordinaten des Aufstellungsortes des jeweiligen Energiegerätes 2. Daneben enthalten die externen Kontextdaten in dem Kontextdatenspeicher 2C auch benutzerspezifische Kontextdaten, insbesondere Daten hinsichtlich der Muttersprache des Kunden oder Nutzers N oder dessen Qualifikation zur Bedienung des Energiegerätes 2. Beispielsweise können diese Kontextdaten angeben, dass der Nutzer N Englisch als Muttersprache hat. Weiterhin können die Kontextdaten beispielsweise angeben, dass es sich bei dem Nutzer N um einen Privatnutzer handelt, der keine besondere technische Qualifikation zur Aufstellung oder Bedienung des Energiegerätes 2 besitzt. In einer möglichen Ausführungsform des Energiegerätes 2 verfügt dieses auch über Sensoren 2H, durch die Kontextdaten des Energiegerätes 2 automatisch erfasst werden können. Beispielsweise geben die sensorisch erfassten Kontextdaten einen momentanen Betriebszustand des Energiegerätes 2 an. Beispielsweise können die Kontextdaten einen Energieladezustand von Speicherzellen eines Energiespeichergerätes 2 angeben. Die Sensoren 2H können auch externe Kontextdaten liefern.

Bei einer möglichen Ausführungsform können die verschiedenen Kontextdaten beispielsweise die Netzwerkadresse, z.B. des Geräteherstellerservers sowie die Seriennummer des Energiegerätes 2 und weitere Parameter, beispielsweise ein Fehlercode eines angezeigten Fehlers oder Konfigurationseinstellungsparameter in einem Text-String zusammengefasst bzw. verkettet werden, der der Code-Generierungseinheit 2B zugeführt wird. Ein solcher Text-String lautet beispielsweise für einen Server ʺhttp://Serveradresse?argument1&argument2ʺ. Entsprechend können mit "&" weitere Argumente ergänzt werden. Selbstverständlich kann der Code auch auf einen Mailserver verweisen und/oder nur Textdaten enthalten. Entsprechend können die Textdaten direkt auf dem Endgerät angezeigt werden.

Die Code-Generierungseinheit 2B führt einen Codierungsalgorithmus aus und generiert aus dem zugeführten Text-String bzw. den Kontextdaten einen dynamischen Code, der an die Ausgabeeinheit 2E abgegeben wird. Eine optische Anzeigeeinheit 2F des Energiegerätes 2, beispielsweise ein TFT-Bildschirm, kann einen dynamisch generierten optischen Code ausgeben. Bei diesem optischen Code handelt es sich beispielsweise um einen zweidimensionalen optischen Code, insbesondere einen QRCode. Außerdem kann es sich bei dem optischen Code auch um einen Barcode oder dergleichen handeln.

In einer möglichen Implementierung generiert die Code-Generierungseinheit 2B zusätzlich oder alternativ zu dem dynamisch generierten optischen Code einen akustischen Code, der als Tonfolge oder Tonsequenz von einem Lautsprecher der akustischen Ausgabeeinheit 2G ausgegeben wird. Dies ist bei möglichen Anwendungsfällen von Vorteil, bei dem das Endgerät 2 in dunklen Bereichen mit wenig Licht aufgestellt wird oder in Anwendungsfällen, in denen ein mobiles Endgerät 3 aufgrund des Einbaus des Energiegerätes 2 nicht nahe genug an eine optische Anzeigeeinheit 2F des Energiegerätes 2 manuell durch Nutzer N herangeführt werden kann, und der optisch angezeigte Code, insbesondere einen QRCode, somit nur schwer über eine Kamera 3A des mobilen Endgerätes 3 erfasst werden kann. Weiterhin kann eine akustische Ausgabeeinheit 2G bevorzugt verwendet werden, wenn das Energiegerät 2 relativ klein ist und kein Platz für eine optische Anzeigeeinheit 2F vorhanden ist. Darüber hinaus ist der technische Aufwand zur Implementierung einer akustischen Ausgabeeinheit 2G in vielen Fällen geringer als bei der Implementierung einer optischen Anzeigeeinheit 2F in einem Energiegerät 2. In einer weiteren möglichen Ausführungsform verfügt die Ausgabeeinheit 2E sowohl über eine optische Anzeigeeinheit 2F als auch über eine akustische Ausgabeeinheit 2G, so dass der generierte Code sowohl optisch als auch akustisch an das mobile Endgerät 3 abgegeben werden kann. Dadurch können Fehlerfassungen des ausgegebenen, dynamisch generierten Codes seitens des mobilen Endgerätes 3 vermindert werden, da die empfangenen Codes auf Gleichheit geprüft werden.

Bei einer weiteren möglichen Ausführungsform des erfindungsgemäßen Energiegerätes 2 verfügt das Energiegerät 2 über eine Schnittstelle 2I, mit der eine drahtlose uni- oder bidirektionale Funkdatenübertragung mit dem mobile Endgerät 3 stattfinden kann.

Bei dem in Fig. 1 dargestellten mobilen Endgerät 3 kann es sich beispielsweise um ein mobiles Telefon des Nutzers N handeln. Weiterhin kann das mobile Endgerät 3 auch ein mobiler Computer / Tablet-PC bzw. ein mobiler Laptop sein. Das mobile Endgerät 3 enthält eine Kamera 3A, die den in der optischen Anzeigeeinheit 2F visuell angezeigten, dynamisch generierten optischen Code optisch erfasst. In der Ausführungsform wird der dynamisch generierte, zweidimensionale optische Code in einem sichtbaren Frequenzbereich angezeigt und durch die Kamera 3A erfasst. Bei weiteren möglichen Ausführungsformen wird der dynamisch generierte, zweidimensionale optische Code in einem nicht sichtbaren Frequenzbereich angezeigt, beispielsweise in einem Infrarotfrequenzbereich. Dies kann beispielsweise erfolgen, um Manipulationen zu verhindern bzw. zu erschweren. In einer weiteren möglichen Ausführungsform werden gleichzeitig mehrere dynamisch generierte, zweidimensionale optische Codes auf der optischen Anzeige 2F zur Erfassung durch die Kamera 3A angezeigt. Diese zweidimensionalen optischen Codes können auch in verschiedenen Frequenzbereichen liegen. Der angezeigte optische zweidimensionale Code verändert sich dynamisch über die Zeit in Abhängigkeit von den aktuellen Kontextdaten des Energiegerätes 2. Geht beispielsweise das Energiegerät 2 von einem ersten Betriebszustand in einen zweiten Betriebszustand über, ändert sich automatisch der angezeigte, dynamisch generierte, optische Code, welcher auf der optischen Anzeigeeinheit 2F angezeigt wird. Zur Fehlervermeidung bei der Erfassung kann der angezeigte bzw. ausgegebene Code eine gewisse Redundanz aufweisen. Die Redundanz kann von Anwendungsfall zu Anwendungsfall unterschiedlich sein. Beispielsweise ist die Code-Redundanz bei einer sicherheitskritischen Anwendung bzw. einem sicherheitskritischen Energiegerät 2 größer als bei weniger sicherheitskritischen Energiegeräten.

Das mobile Endgerät 3 kann in einer möglichen Ausführungsform neben der Kamera 3A auch ein Mikrophon 3B enthalten, um den akustisch ausgegeben, dynamisch generierte Code akustisch zu erfassen. Die Kamera 3A und das Mikrophon 3B sind bei den in Fig. 1 dargestellten Ausführungsbeispielen mit einer Datenverarbeitungseinheit 3C des mobilen Endgerätes 3 verbunden. Diese Datenverarbeitungseinheit 3C kann einen oder mehrere Mikroprozessoren aufweisen. Die Datenverarbeitungseinheit 3C enthält eine Entschlüsselungseinheit 3D, welche dazu vorgesehen ist, einen mit der Kamera 3A und/oder dem Mikrophon 3B erfassten, dynamischen Code zu entschlüsseln. Nach erfolgreicher Entschlüsselung des erfassten, dynamisch generierten Codes durch die Entschlüsselungseinheit 3D des mobilen Endgerätes 3, baut das mobile Endgerät 3 über eine Schnittstelle 3E automatisch eine Datenverbindung zu dem Server 6 auf. Dabei wird ein kontextabhängiges Link zu einem bestimmten Datenbereich innerhalb der Datenbank 7 hergestellt, wodurch die gewünschten, den aktuellen Kontextdaten entsprechende, relevante Geräteinformationsdaten seitens des Servers 6 bereitgestellt werden.

Bei den in Fig. 1 dargestellten Ausführungsbeispiel baut das mobile Endgerät 3 über ein Zugangsnetzwerk 4 und das Datennetzwerk 5, beispielsweise ein lokales Datennetz oder das Internet, automatisch ein entsprechendes kontextabhängiges Link zu einem Systemserver, insbesondere einem Server des Geräteherstellers des Energiegerätes 2, auf.

Wie in Fig. 1 ferner zu erkennen ist, verfügt das mobile Endgerät 3 ferner über eine Funkschnittstelle 3F, mit der zusätzlich Daten zwischen dem Energiegerät 2 und dem mobilen Endgerät 3 ausgetauscht werden können. Beispielsweise kann es sich hierbei eine WLAN-Schnittstelle oder NFC-Schnittstelle handeln. In einer möglichen Ausführungsform enthält das mobile Endgerät 3 ferner ein Display 3G sowie eine eigene Nutzerschnittstelle 3H. Die vom Server 6 bereitgestellten relevanten Geräteinformationsdaten können bei einer möglichen Ausführungsform über das Datennetzwerk 5 an das mobile Endgerät 3 des Nutzers N übertragen werden. Die von dem mobilen Endgerät 3 des Nutzers N von dem Server 6 über das Datennetzwerk 5 empfangenen relevanten Geräteinformationsdaten des Energiegerätes 2, werden durch die Datenverarbeitungseinheit 3C des mobilen Endgerätes 3 in einer möglichen Ausführungsform aufbereitet und anschließend auf dem Display 3G angezeigt. In einer alternativen Ausführungsform werden die empfangenen relevanten Geräteinformationsdaten des Energiegerätes 2 ohne Aufbereitung direkt auf dem Display 3G des mobilen Endgerätes 3 dem Nutzer N angezeigt.

Die von dem Server 6 empfangenen relevanten Geräteinformationsdaten werden zumindest teilweise von dem mobilen Endgerät 3 an das Energiegerät 2 über die drahtlose Schnittstelle, beispielsweise WLAN-Schnittstelle, weitergeleitet. Die von dem mobilen Endgerät 3 über die drahtlose Schnittstelle an das Energiegerät 2 weitergeleiteten relevanten Geräteinformationsdaten können dort auf der optischen Anzeigeeinheit 2F des Energiegerätes 2 dem Nutzer N angezeigt werden und/oder über die akustische Ausgabeeinheit 2G des Energiegerätes 2 ausgegeben werden. Beispielsweise kann eine entsprechende Sprachanweisung über einen Lautsprecher der akustischen Ausgabeeinheit 2G des Energiegerätes 2 ausgegeben werden. Bei einer möglichen Ausführungsvariante hat der Benutzer somit die Möglichkeit, die relevanten Geräteinformationsdaten des Energiegerätes 2 sowohl auf dem Display 3G seines mobilen Endgerätes 3 als auch über die Ausgabeeinheit 2E des Energiegerätes 2 zu erhalten.

In einer nicht in den Schutzbereich der Patentansprüche fallenden Ausführungsvariante handelt es sich bei dem Energiegerät 2 um eine Stromquelle für einen Schweißbrenner. In einer Ausführungsform ist beispielsweise in dem Kontextdatenspeicher 2C eine Homepage-Adresse der Stromquelle abgelegt. Diese Homepage-Adresse oder Link kann bei jedem Gerätetyp der Stromquelle und, in Abhängigkeit von der jeweiligen individuellen Konfiguration, nach jedem Einschalten der Stromquelle unterschiedlich lauten. Aus der Netzwerkadresse und/oder weiteren Geräteparametern, beispielsweise der Seriennummer des Energiegerätes 2, kann bei einer möglichen Ausführungsvariante ein Text-String generiert werden, der durch die Code-Generierungseinheit 2B des Energiegerätes bzw. der Stromquelle 2 entsprechend einem ausgeführten Algorithmus in Abhängigkeit von den Kontextdaten in einen dynamisch generierten Code umgesetzt wird, der beispielsweise als ein optisch zweidimensionaler Code in der optischen Anzeigeeinheit 2F der Stromquelle 2 angezeigt wird. Der angezeigte zweidimensionale Code wird durch die Kamera 3A des mobilen Endgerätes 3 optisch erfasst, wobei die Datenverarbeitungseinheit 3C des mobilen Endgerätes 3 automatisch ein kontextabhängiges Link auf einen passenden Abschnitt auf der Homepage des Geräteherstellers erzeugt, ohne dass es weiterer Eingaben des Nutzers N bedarf. Bei einem Scan angezeigten Codes werden Links auf Einzeldokumente (Webseiten) generiert, die explizit geräterelevante kontextspezifische Informationsdaten dem Nutzer N zur Verfügung stellen, beispielsweise Versionsinformationen, TCO-Daten, Laufzeitdaten sowie Einstellungen, die an dem Energiegerät 2, beispielsweise der Stromquelle, vorzunehmen sind.

In einer möglichen Ausführungsform wird z.B. ein Link auf einen passenden Abschnitt in einer Bedienungsanleitung des Energiegerätes 2 automatisch hergestellt, beispielsweise auf ein dort beschriebenes Schweißprogramm, das Schweißanweisungen enthält. Weiterhin können dort Software-Optionen angegeben sein, sowie eine Kurzanleitung zu Parametern bei Prozessen der Stromquelle 2. Weiterhin können dort beispielsweise Garantiehinweise für das Energiegerät 2 abgelegt sein. Weiterhin kann ein Link auf eine Dokumenten-Library oder Einzeldokumente automatisch aufgebaut werden bzw. Links auf Kalibrierdokumente, Servicedokumente oder Montageanweisungen. Weiterhin kann ein Link auf Kontaktadressen aufgebaut werden, beispielsweise auf internationale oder nationale Sammeladressen. Weiterhin ist es möglich, dass ein Link auf Bestellformulare generiert wird, beispielsweise für eine Anforderung von Dienstleistungen, Freischalt-Codes, Ersatzteilen oder Sonderprogrammen. Weiterhin ist es möglich, eine Verrechnung von Serviceleistungen zu vollziehen, beispielsweise durch Mitsenden von Maschinendaten oder Printdaten.

Bei einer möglichen Ausführungsform, bei der die Datenverbindung bzw. das Link direkt basierend auf Stromquellen-Informationen des Energiegerätes 2, wie beispielsweise Seriennummern, Print-Daten, etc., hergestellt wird, kann in einer möglichen Ausführungsform ein aufgerufenes Web-Formular, beispielsweise ein Bestellformular auf Basis derartiger Kontextdaten schon teilweise ausgefüllt werden, insbesondere mit vertrauenswürdigen Informationsdaten. In ein derartiges Webformular kann z.B. bereits eine Seriennummer des Geräteherstellers eingefügt werden. Hierdurch können Abtippfehler bei komplexen Seriennummern seitens des Nutzers N vermieden werden. Somit ist es möglich, stromquellenabhängige Kurzinformationen, beispielsweise die Bezeichnung, Seriennummer, Nutzerkennzeichen oder dergleichen, als Vorabinformation zu Service- und/oder Reparaturzwecken an den Server 6 des Geräteherstellers zu übertragen.

Neben den Kontextdaten werden bei der dynamischen Generierung des Codes auch externe Kontextdaten, insbesondere nutzerspezifische und optional umgebungsspezifische Kontextdaten berücksichtigt werden. Diese umgebungsspezifischen Kontextdaten sind beispielsweise Koordinaten bzw. der Aufstellungsort des Schweißgerätes 2. Die nutzerspezifischen Kontextdaten geben beispielsweise eine Muttersprache des Nutzers N an. Auf diese Weise werden die relevanten Geräteinformationen von dem Server 6 in der Muttersprache des Nutzers bereitgestellt, indem auf einen entsprechenden Sprachbereich der Datenbank 7 zugegriffen wird. Weiterhin kann anhand des Aufstellungsortes bzw. der Koordinaten erkannt werden, in welchem Sprachgebiet das Energiegerät 2 aufgestellt worden ist.

In einer möglichen Ausführungsform kann der Nutzer N bei Auftreten eines Fehlers über die Nutzerschnittstelle 2D oder über die Nutzerschnittstelle 3H des mobilen Endgerätes 3 eine Fehlerbeschreibung oder eine Anfrage an den Server 6 des Geräteherstellers richten. Derartig manuell eingegebene Daten oder Stichwörter können ebenfalls Kontextdaten bilden. Kontextdaten können intrinsisch sein, d.h. in dem Kontextdatenspeicher 2C vorkonfiguriert sein oder auch zumindest teilweise durch den Nutzer N eingegeben werden. Darüber hinaus können Kontextdaten auch sensorisch, beispielsweise über Bildsensoren 2H des Energiegerätes 2 erfasst werden. Beispielsweise kann ein Ladezustand SoC eines Energiespeichergerätes 2 als Kontextdaten erfasst werden. Ist beispielsweise der Ladezustand gering und richtet der Nutzer N eine Anfrage zur Behebung eines aufgetretenen Fehlers an den Systemserver 6, kann dieser beispielsweise automatisch auf eine Bedienungsanleitung verlinken, mit der der Nutzer N eine Routine erhält, um den Fehler zu beseitigen. In diesem einfachen Beispiel könnte der Nutzer N dazu angehalten werden, den Ladezustand SoC zu erhöhen, z. B. indem er einen Netzstecker in ein Stromversorgungsnetz einsteckt und für eine gewisse Zeit wartet, bis sich der Ladezustand SoC ausreichend erhöht hat. Der Link auf diesen spezifischen Bereich in einer möglicherweise sehr umfangreichen Bedienungsanleitung erfolgt dabei automatisch anhand des dynamisch generierten Codes auf Basis interner und -externer Kontextdaten, die sich im Zeitverlauf dynamisch entsprechend dem momentanen Zustand des Energiegerätes 2 ändern können.

Die Erfassung des dynamisch generierten Codes erfolgt bei dem erfindungsgemäßen System 1, wie es in Fig. 1 dargestellt ist, draht- bzw. berührungslos, d.h. ein Bild wird per Kamera 3A und/oder ein Ton wir mittels eines Mikrophons 3B des tragbaren mobilen Endgerätes 3, welcher der Nutzer N mit sich trägt, erfasst.

Bei dem mobilen Endgerät 3 kann es sich beispielsweise um ein Smartphone des Nutzers N handeln. Bei dieser Ausführungsform kann der Nutzer N ein entsprechendes Applikationsprogramm bzw. eine App herunterladen, welches die Entschlüsselung eines erfassten, dynamisch generierten Codes durch die Datenverarbeitungseinheit 3C des mobilen Endgeräts 3 durchführt. In einer möglichen Ausführungsform kann der Nutzer N das Applikationsprogramm von dem Server 6 des Geräteherstellers herunterladen. In einer möglichen Ausführungsform muss sich der Nutzer bzw. Kunde hierfür gegenüber dem Server 6 als dazu berechtigt authentifizieren, beispielsweise durch Angabe einer Kundennummer und/oder einer Rechnungs- oder Liefernummer.

Bei einer weiteren möglichen Ausführungsvariante wird der Nutzer N automatisch kontextabhängig nach Erfassung des dynamisch generierte Codes durch das mobile Endgerät 3 telefonisch mit einer Hotline-Servicenummer des Geräteherstellers verbunden, wobei die Hotline-Nummer für den spezifischen Gerätetyp und/oder den momentanen Zustand des Energiegerätes 3 geeignet ist. In dieser Ausführungsform muss der Nutzer N sich nicht mühevoll von einem Service-Techniker zu einem weiteren Service-Techniker weiterver-binden lassen, der letztendlich über die notwendigen Informationen für den spezifischen Gerätetyp verfügt. Bei dieser Ausführungsform werden die Geräteinformationsdaten optional zusätzlich auf einer Anzeigeeinheit 3G des mobilen Endgerätes 3 dem Benutzer angezeigt, wobei sie hauptsächlich telefonisch übermittelt werden. Die Geräteinformationsdaten können auch als gespeicherte Sprachsequenz und/oder durch Sprachsynthese erzeugt und telefonisch übermittelt werden. In einer möglichen Ausführungsvariante werden die telefonisch übermittelten Geräteinformationsdaten zusätzlich auf dem Display 3G des mobilen Endgerätes 3 und/oder der optischen Anzeigeeinheit 2F des Energiegerätes 2 angezeigt. In dieser Ausführungsvariante erhält der Nutzer N die Informationen sowohl als Informationsdaten über das Datennetzwerk 5 als auch telefonisch über ein Telefonnetz.

Bei einer weiteren Ausführungsvariante kann ein Servicetechniker des Geräteherstellers, während einer Fehlerbehandlung durch den Nutzer N an dem Energiegerät 2, zusätzlich beispielsweise mittels an dem Endgerät 2 vorhandenen Sensoren 2H überwachen, ob der Nutzer N tatsächlich entsprechend seinen Anweisungen und/oder der in der Datenbank 7 vorgegebenen Subroutine-Fehlerbehandlung handelt. Beispielsweise wird ein dynamisch generierter Code, insbesondere ein QRCode, bei jeder Zustandsänderung des Energiegerätes 2 auf das mobile Endgerät 3 übertragen, so dass die Zustandsänderung innerhalb des Energiegerätes 2 durch den Server 6 oder einen entsprechenden Servicetechniker des Geräteherstellers in Echtzeit erkannt und mitverfolgt werden kann. Entsprechende Geräteinformationsdaten bzw. Anweisungen können in Reaktion auf die Zustandsänderung ebenfalls in Echtzeit über das mobile Endgerät 3 dem Nutzer N übermittelt werden.

Bei einer weiteren möglichen Ausführungsform des erfindungsgemäßen Systems 1 werden dynamisch generierte Codes in einstellbaren Zeitintervallen periodisch generiert, beispielsweise alle 10 Sekunden. In Abhängigkeit von dem Typ des Energiegerätes 2 kann dieses Zeitintervall bzw. Beobachtungszeitintervall eingestellt werden. Die Beobachtung des Energiegerätes 2 kann während der Aufstellungsphase, aber auch während der Betriebsphase des Energiegerätes 2 erfolgen. Die übertragenen Geräteinformationsdaten können auch eine Warnmeldung hinsichtlich des momentanen Zustands des Energiegerätes 2 umfassen. Zeigt der entschlüsselte dynamische Code, der beispielsweise auf sensorisch erfassten Kontextdaten beruht, einen kritischen Zustand des Energiegerätes 2 an, kann durch den Server 6 automatisch eine Warnmeldung an das mobile Endgerät 3 des Nutzers N übertragen werden. Die Warnmeldung kann beispielsweise auch akustisch an dem mobilen Endgerät 3 über einen dort vorgesehenen Lautsprecher abgegeben werden. Hierdurch ist es, z.B. möglich, dass der Nutzer N beim Abarbeiten einer Fehlerbehandlungsroutine, die er als Geräteinformationsdaten empfängt, Hinweise oder Warnungen von dem Geräteherstellerserver 6 während der laufenden Fehlerbehandlung erhält.

Bei dem in Fig. 1 dargestellten Ausführungsbeispiel weist das System 1 ein Energiegerät 2 auf. In anderen Ausführungsvarianten können auch mehrere Energiegeräte 2 vorgesehen sein, die gegebenenfalls auch miteinander verschaltet sind. Dabei kann jedes Energiegerät 2 über eine eigene Ausgabeeinheit 2E bzw. ein graphisches Nutzerinterface GUI verfügen.

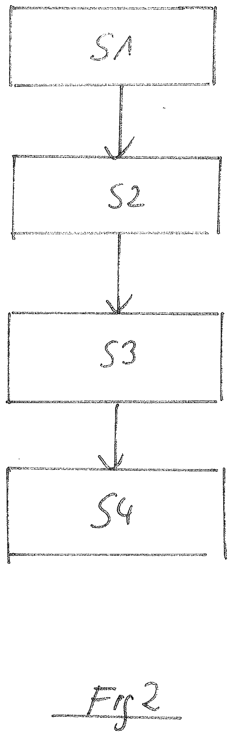

Fig. 2 enthält ein Ablaufdiagramm zur Darstellung eines möglichen Ausführungsbeispiels eines erfindungsgemäßen Verfahrens zum Bereitstellen von relevanten Geräteinformationsdaten für ein Energiegerät 2.

In einem ersten Schritt S1 wird ein Code in Abhängigkeit von Kontextdaten des Energiegerätes 2 durch eine Code-Generierungseinheit, beispielsweise die in Fig. 1 dargestellte Code-Generierungseinheit 2B, generiert. Dabei liest die Code-Generierungseinheit 2B Kontextdaten aus einem Kontextdatenspeicher 2C aus. Die Kontextdaten umfassen interne und externe Kontextdaten.

Anschließend wird in einem Schritt S2 der dynamisch generierte kontextspezifische Code durch eine Ausgabeeinheit, beispielsweise durch die in Fig. 1 dargestellte Ausgabeeinheit 2E des Energiegerätes 2, an ein mobiles Endgerät 3 des Nutzers N ausgegeben. Die Ausgabe des generierten Codes erfolgt bei einer möglichen Ausführungsform in optischer Form, beispielsweise durch Ausgabe eines zweidimensionalen optischen Codes, insbesondere eines QRCodes. Weiterhin ist es möglich, dass der generierte Code in akustischer Form, beispielsweise als Tonsignal bzw. Tonsequenz abgegeben wird.

In einem weiteren Schritt S3 wird automatisch eine Datenverbindung bzw. Link zwischen dem mobilen Endgerät 3 des Nutzers und einem Server, beispielsweise dem in Fig. 1 dargestellten Server 6, nach erfolgreicher Entschlüsselung des dynamisch kontextspezifischen Codes aufgebaut, wobei der Link auf einen Bereich gerichtet ist, in dem sich spezifisch für den jeweiligen Kontext relevante Geräteinformationsdaten mit passenden Informationen oder Anweisungen befinden.

In einem weiteren Schritt S4 werden die relevanten Geräteinformationsdaten durch den Server 6, die für den in den Kontextdaten angegebenen Kontext des Energiegerätes 2 passend sind, bereitgestellt.

## Patentansprüche

1. Energiebereitstellungsgerät (2) zur Bereitstellung elektrischer Energie für einen Schweißbrenner, mit
einer Code-Generierungseinheit (2B), welche eingerichtet ist, automatisch einen Code in Abhängigkeit von internen und externen Kontextdaten des Energiebereitstellungsgerätes (2), welche ein Nutzer (N) aktuell konfiguriert und/oder kontrolliert, dynamisch zu generieren, mit
einer Ausgabeeinheit (2E), welche eingerichtet ist, den dynamisch generierten Code zur Erfassung durch ein mobiles Endgerät (3) des Nutzers (N) auszugeben, und mit einem Kontextdatenspeicher (2C), welcher eingerichtet ist, die internen und externen Kontextdaten zu speichern,
wobei die Code-Generierungseinheit (2B) Zugriff auf den Kontextdatenspeicher (2C) zur Generierung des Codes in Abhängigkeit der aus dem Kontextdatenspeicher ausgelesenen internen und externen Kontextdaten hat, wobei die internen Kontextdaten konfigurierbare Geräteparameter des Energiebereitstellungsgerätes (2) und
die externen Kontextdaten nutzerspezifische Kontextdaten umfassen.

2. Energiebereitstellungsgerät (2) nach Anspruch 1, wobei die Ausgabeeinheit (2E) in dem Energiebereitstellungsgerät (2) integriert ist oder in einem über eine Schnittstelle mit dem Energiebereitstellungsgerät (2) verbundenen Gerät angeordnet ist.

3. Energiebereitstellungsgerät (2) nach Anspruch 1,
wobei die internen Kontextdaten gerätespezifische Kontextdaten, eine Geräte-ID des Energiebereitstellungsgerätes (2), voreingestellte Geräteparameter des Energiebereitstellungsgerätes (2), eine aktuelle Geräteeinstellung oder Materialbestückung des Energiebereitstellungsgerätes (2) und/oder eine Netzwerkadresse eines Servers (6) aufweisen
und/oder
wobei die externen Kontextdaten umgebungsspezifische Kontextdaten aufweisen.

4. Energiebereitstellungsgerät (2) nach einem der vorangehenden Ansprüche 1 bis 3, wobei das Energiebereitstellungsgerät (2) Sensoren (2H) aufweist, welche eingerichtet sind, die Kontextdaten automatisch zu erfassen.

5. Energiebereitstellungsgerät (2) nach einem der vorangehenden Ansprüche 1 bis 4, wobei das Energiebereitstellungsgerät (2) eine Nutzerschnittstelle umfasst, welche zur Eingabe der Kontextdaten einrichtet ist, oder
wobei das Energiebereitstellungsgerät (2) eine drahtlose Schnittstelle umfasst, welche zur Eingabe der Kontextdaten mit einem mit dem Energiebereitstellungsgerät (2) verbundenen mobilen Endgerät (3) eingerichtet ist.

6. Energiebereitstellungsgerät (2) nach einem der vorangehenden Ansprüche 1 bis 5, wobei die Ausgabeeinheit (2E) des Energiebereitstellungsgerätes (2) eine optische Anzeigeeinheit (2F) aufweist, die dazu ausgebildet ist, einen dynamisch generierten zweidimensionalen optischen Code anzuzeigen, der durch eine Kamera (3A) des mobilen Endgerätes (3) erfassbar ist und/oder
eine akustische Ausgabeeinheit (2G) aufweist, welche dazu ausgebildet ist, einen akustischen Code auszugeben, welcher durch ein Mikrophon (3B) des mobilen Endgerätes (3) erfassbar ist.

7. Energiebereitstellungsgerät (2) nach Anspruch 6, wobei das Energiebereitstellungsgerät (2) eine drahtlose Schnittstelle umfasst, welche eingerichtet ist, die durch das mobile Endgerät (3) von einem Server (6) empfangene relevante Geräteinformationsdaten zumindest teilweise von dem mobilen Endgerät (3) zu empfangen;
wobei das Energiebereitstellungsgerät (2) eine optische Anzeigeeinheit (2F) und/oder eine akustische Ausgabeeinheit (2G) umfasst, welche eingerichtet sind, die von dem mobilen Endgerät (3) über die drahtlose Schnittstelle durch das Energiebereitstellungsgerät (2) empfangenen relevanten Geräteinformationsdaten dem Nutzer (N) anzuzeigen und/oder auszugeben.

8. Energiebereitstellungsgerät (2) nach Anspruch 7,
wobei der dynamisch generierte optische zweidimensionale Code, welcher durch die optische Anzeigeeinheit (2F) angezeigt wird, ein QRCode und/oder ein Barcode ist.

9. System (1) zur Bereitstellung relevanter Geräteinformationsdaten für ein Energiebereitstellungsgerät (2) mit:
einem Energiebereitstellungsgerät (2) nach einem der Ansprüche 1 bis 8;
einem Server (6); und
einem mobilen Endgerät (3) eines Nutzers (N) mit einer Schnittstelle (3E), einer Entschlüsselungseinheit (3D) und einer drahtlosen Schnittstelle (3F), wobei das mobile Endgerät (3) dazu ausgebildet ist, den von der Ausgabeeinheit (2E) des Energiebereitstellungsgerätes (2) ausgegebenen dynamisch generierten Code zu erfassen, und wobei das mobile Endgerät (2) dazu ausgebildet ist, nach erfolgreicher Entschlüsselung des erfassten dynamisch generierten Codes durch die Entschlüsselungseinheit (3D) über die Schnittstelle (3E) eine Datenverbindung zu dem Server (6) aufzubauen, wobei der Server (6) dazu ausgebildet ist,
Geräteinformationsdaten für das Energiebereitstellungsgerät (2) bereitzustellen, die für den in den Kontextdaten angegebenen Kontext relevant sind; wobei das mobile Endgerät (3) weiterhin dazu ausgebildet ist, die von dem Server (6) empfangenen relevanten Geräteinformationsdaten zumindest teilweise an das Energiebereitstellungsgerät (2) über die drahtlose Schnittstelle (3F) weiterzuleiten.

10. System (1) nach Anspruch 9, wobei das mobile Endgerät (3) ferner dazu ausgebildet ist, die von dem Server (6) über das Netzwerk (5) empfangenen relevanten Geräteinformationsdaten des Energiebereitstellungsgerätes (2) durch eine Datenverarbeitungseinheit (3C) des mobilen Endgerätes (3) aufzubereiten oder direkt auf einem Display (3G) des mobilen Endgerätes (3) dem Nutzer (N) anzuzeigen.

11. System (1) nach Anspruch 9 oder 10,
wobei die auf einem Display (3G) des mobilen Endgerätes (3) und/oder der optischen Anzeigeeinheit (2F) des Energiebereitstellungsgerätes (2) angezeigten relevanten Geräteinformationsdaten eine Bedienungsanleitung zur Einstellung, Bedienung und/oder kontextspezifischen Fehlerbehandlung, Montageanweisungen, Bestückungsanweisungen, Kalibrieranweisungen und/oder Bestellformulare aufweisen.

12. Verfahren zum Bereitstellen von relevanten Geräteinformationsdaten für ein Energiebereitstellungsgerät (2) gemäß einem der Ansprüche 1 bis 7, mit den Schritten:
(a) Dynamisches Generieren (S1) eines Codes in Abhängigkeit von internen und externen Kontextdaten des Energiebereitstellungsgerätes, welche ein Nutzer (N) aktuell konfiguriert und/oder kontrolliert, durch eine Code-Generierungseinheit (2B) des Energiebereitstellungsgerätes (2), wobei die internen Kontextdaten konfigurierbare Geräteparameter des Energiebereitstellungsgerätes (2) und die externen Kontextdaten nutzerspezifische Kontextdaten umfassen;
(b) Ausgeben (S2) des dynamisch generierten kontextspezifischen Codes durch eine Ausgabeeinheit (2E) des Energiebereitstellungsgerätes (2) an ein mobiles Endgerät (3) eines Nutzers (N);
(c) Aufbauen (S3) einer Datenverbindung zwischen dem mobilen Endgerät (3) des Nutzers (N) und einem Server (6) nach erfolgreicher Entschlüsselung des dynamisch generierten kontextspezifischen Codes durch eine Entschlüsselungseinheit (3D) des mobilen Endgerätes (3); und
(d) Bereitstellen (S4) von relevanten Geräteinformationsdaten durch den Server (6), die für den in den Kontextdaten angegebenen Kontext relevant sind.

## Claims

1. Power supply device (2) for supplying electrical power for a welding torch, comprising
a code generation unit (2B) set up to automatically generate the code dynamically as a function of internal and external context data of the power supply device (2) which are currently being configured and/or controlled by a user (N), comprising
an output unit (2E) set up to output the dynamically generated code for capture by a mobile terminal (3) of the user (N), and comprising a context data store (2C) set up to store the internal and external context data,
wherein the code generation unit (2B) has access to the context data store (2C) for generating the code as a function of the internal and external context data read out from the context data store,
wherein the internal context data comprise configurable device parameters of the power supply device (2) and the external context data comprise user-specific context data.

2. Power supply device (2) according to claim 1, wherein the output unit (2E) is integrated into the power supply device (2) or arranged in a device connected to the power supply device (2) via an interface.

3. Power supply device (2) according to claim 1,
wherein the internal context data include device-specific context data, a device ID of the power supply device (2), preset device parameters of the power supply device (2), a current device setting or equipment provision of the power supply device (2) and/or a network address of a server (6); and/or
wherein the external context data include environment-specific context data.

4. Power supply device (2) according to any of preceding claims 1 to 3,
wherein the power supply device (2) has sensors (2H) set up to capture the context data automatically.

5. Power supply device (2) according to any of preceding claims 1 to 4,
wherein the power supply device (2) comprises a user interface set up for inputting the context data, or
wherein the power supply device (2) comprises a wireless interface set up for inputting the context data using a mobile terminal (3) connected to the power supply device (2).

6. Power supply device (2) according to any of preceding claims 1 to 5,
wherein the output unit (2E) of the power supply device (2) has an optical display unit (2F) formed to display a dynamically generated two-dimensional optical code which can be captured by a camera (3A) of the mobile terminal (3), and/or
an acoustic output unit (2G) formed to output an acoustic code which can be captured by a microphone (3B) of the mobile terminal (3).

7. Power supply device (2) according to claim 6, wherein the power supply device (2) comprises a wireless interface set up to receive the relevant device information data, received by the mobile terminal (3) from a server (6), at least in part from the mobile terminal (3);
wherein the power supply device (2) comprises an optical display unit (2F) and/or an acoustic output unit (2G) which are set up to display to the user (N) and/or to output the relevant device information data received by the energy supply device (2) from the mobile terminal (3) via the wireless interface.

8. Power supply device (2) according to claim 7,
wherein the dynamically generated optical two-dimensional code displayed by the optical display unit (2F) is a QR code and/or a barcode.

9. System (1) for providing relevant device information data for a power supply device (2), comprising:
a power supply device (2) according to any of claims 1 to 8;
a server (6); and
a mobile terminal (3) of a user (N) comprising an interface (3E), a decryption unit (3D) and a wireless interface (3F), the mobile terminal (3) being formed to capture the dynamically generated code outputted by the output unit (2E) of the power supply device (2), and wherein the mobile terminal (2) is formed to establish a data connection to the server (6) via the interface (3E) after successful decryption of the captured dynamically generated code by the decryption unit (3D), the server (6) being formed to provide device information data for the energy supply device (2) which are relevant to the context specified in the context data;
wherein the mobile terminal (3) is further formed to pass on the relevant device information data received from the server (6) to the energy supply device (2) via the wireless interface (3F), at least in part.

10. System (1) according to claim 9, wherein the mobile terminal (3) is further formed to prepare the relevant device information data of the power supply device (2), received from the server (6) via the network (5), by way of a data processing unit (3C) of the mobile terminal (3) or to display them to the user (N) directly on a display (3G) of the mobile terminal (3) .

11. System (1) according to either claim 9 or claim 10,
wherein the relevant device information data displayed on a display (3G) of the mobile terminal (3) and/or on the optical display unit (2F) of the power supply device (2) include an operating instruction regarding settings, operation and/or context-specific error-handling, assembly instructions, equipment fitting instructions, calibration instructions and/or purchase order forms.

12. Method for providing relevant device information data for a power supply device (2) according to any of claims 1 to 7, comprising the steps of:
(a) dynamically generating (S1) a code as a function of internal and external context data of the power supply device which are currently being configured and/or controlled by a user (N), by way of a code generation unit (2B) of the power supply device (2), the internal context data comprising configurable device parameters of the power supply device (2) and the external context data comprising user-specific context data;
(b) outputting (S2) the dynamically generated context-specific code to a mobile terminal (3) of a user (N) by way of an output unit (2E) of the power supply device (2) ;
(c) establishing (S3) a data connection between the mobile terminal (3) of the user (N) and a server (6) after successful decryption of the captured dynamically generated code by a decryption unit (3D) of the mobile terminal (3); and
(d) providing (S4) relevant device information data, which are relevant to the context specified in the context data, by way of the server (6).

## Revendications

1. Appareil de fourniture d'énergie (2) destiné à fournir de l'énergie électrique à un chalumeau, comportant une unité de génération de codes (2B) qui est adaptée pour générer automatique, de manière dynamique, un code qui est fonction de données contextuelles internes et externes lesquelles sont relatives à l'appareil de fourniture d'énergie (2) et lesquelles sont momentanément configurées et/ou vérifiées par un utilisateur (N), comportant une unité de sortie (2E) qui est adaptée pour produire ledit code, généré de manière dynamique, afin que celui-ci soit détecté par un terminal mobile (3) de l'utilisateur (N), et comportant une mémoire de données contextuelles (2C) qui est adaptée pour stocker les données contextuelles internes et externes,
dans lequel l'unité de génération de codes (2B) a accès à la mémoire de données contextuelles (2C) afin de générer ledit code en fonction des données contextuelles internes et externes qu'elle a lues dans la mémoire de données contextuelles, les données contextuelles internes comprenant des paramètres d'appareil susceptibles d'être configurées qui sont relatives à l'appareil de fourniture d'énergie (2), et les données contextuelles externes comprenant des données contextuelles spécifiques audit utilisateur.

2. Appareil de fourniture d'énergie (2) selon la revendication 1, dans lequel l'unité de sortie (2E) est intégrée à l'appareil de fourniture d'énergie (2) ou est disposée dans un appareil qui est relié à l'appareil de fourniture d'énergie (2) à travers une interface.

3. Appareil de fourniture d'énergie (2) selon la revendication 1,
dans lequel les données contextuelles internes comportent des données contextuelles spécifiques à l'appareil, un ID d'appareil de l'appareil de fourniture d'énergie (2), des paramètres d'appareil par défaut de l'appareil de fourniture d'énergie (2), un réglage momentané de l'appareil ou un équipement en matériel de l'appareil de fourniture d'énergie (2) et/ou une adresse réseau d'un serveur (5) ;
et/ou
dans lequel les données contextuelles externes comportent des données contextuelles spécifiques à l'environnement.

4. Appareil de fourniture d'énergie (2) selon l'une des revendications précédentes 1 à 3, dans lequel l'appareil de fourniture d'énergie (2) comporte des capteurs (2H) qui sont adaptés pour détecter automatiquement lesdites données contextuelles.

5. Appareil de fourniture d'énergie (2) selon l'une des revendications précédentes 1 à 4, ledit appareil de fourniture d'énergie (2) comportant une interface d'utilisateur qui est adaptée pour entrer lesdites données contextuelles, ou
ledit appareil de fourniture d'énergie (2) comprenant une interface sans fil qui est adaptée pour entrer lesdites données contextuelles au moyen d'un terminal mobile (3) qui est relié à l'appareil de fourniture d'énergie (2).

6. Appareil de fourniture d'énergie (2) selon l'une des revendications précédentes 1 à 5, dans lequel l'unité de sortie (2E) de l'appareil de fourniture d'énergie (2) compore une unité d'affichage optique (2F) qui est adaptée pour afficher un code optique bidimensionnel lequel a été généré de manière dynamique et lequel peut être détecté par une caméra (3A) du terminal mobile (3), et/ou
comporte une unité de sortie acoustique (2G) qui est adaptée pour produire un code acoustique lequel peut être détecté par un microphone (3B) du terminal mobile (3).

7. Appareil de fourniture d'énergie (2) selon la revendication 6, ledit appareil de fourniture d'énergie (2) comprenant une interface sans fil qui est adaptée pour recevoir par l'intermédiaire du terminal mobile (3), au moins partiellement, des données d'information d'appareil pertinentes que le terminal mobile (3) a reçues depuis un serveur (6);
ledit appareil de fourniture d'énergie (2) comprenant une unité d'affichage optique (2F) et/ou une unité de sortie acoustique (2G) qui sont adaptées pour afficher et/ou fournir, pour l'utilisateur (N), les données d'information d'appareil pertinentes que le terminal mobile (3) a reçues, à travers l'interface sans fil, au moyen de l'appareil de fourniture d'énergie (2).

8. Appareil de fourniture d'énergie (2) selon la revendication 7,
dans lequel le code bidimensionnel optique, qui a été généré de manière dynamique et qui est affiché par l'unité d'affichage optique (2F), correspond à un code QR et/ou un code-barres.

9. Système (1) qui permet de fournir des données d'information d'appareil pour un appareil de fourniture d'énergie (2) et qui comporte :
un appareil de fourniture d'énergie (2) selon l'une des revendications 1 à 8 ; un serveur (6) ; et
un terminal mobile (3) d'un utilisateur (N) comportant une interface (3E), une unité de déchiffrage (3D) et une interface sans fil (3F), le terminal mobile (3) étant réalisé de manière à détecter le code, généré de manière dynamique, qui est produit par l'unité de sortie (2E) de l'appareil de fourniture d'énergie (2), et le terminal mobile (3) étant réalisé de manière à établir, une fois le code, généré de manière dynamique puis détecté, a été déchiffré avec succès au moyen de l'unité de déchiffrage (3D), une connexion de données vers le serveur (6) à travers l'interface (3E), le serveur (6) étant réalisé de manière à fournir des données d'information d'appareil à l'appareil de fourniture d'énergie (2) qui sont pertinentes pour le contexte indiqué dans les données contextuelles ; le terminal mobile (3) étant en outre réalisé de manière à transmettre depuis le serveur (6), à travers l'interface sans fil (3F), les données d'information d'appareil pertinentes, suite à leur réception, au moins partiellement à l'appareil de fourniture d'énergie (2).

10. Système (1) selon la revendication 9, dans lequel le terminal mobile (3) est en outre adapté pour traiter les données d'information d'appareil pertinentes de l'appareil de fourniture d'énergie (2), que le serveur (6) a reçues à travers le réseau (5), au moyen d'une unité de traitement de données (3C) du terminal mobile (3) ou bien pour les afficher directement sur un écran d'affichage (3G) pour l'utilisateur (N) .

11. Système (1) selon les revendications 9 ou 10,
dans lequel les données d'information d'appareil pertinentes, qui sont affichées sur un écran d'affichage (3G) du terminal mobile (3) et/ou sur l'unité d'affichage optique (2F) de l'appareil de fourniture d'énergie (2), comportent des instructions d'utilisation relatives au réglage, à l'utilisation et/ou au traitement d'erreurs spécifique au contexte, des instructions de montage, des instructions d'équipement, des instructions de calibrage et/ou des bons de commande.

12. Procédé visant à fournir des données d'information d'appareil pertinentes à un appareil de fourniture d'énergie (2) selon l'une des revendications 1 à 7, comportant les étapes consistant à :
(a) générer (S1), de manière dynamique, un code qui est fonction de données contextuelles internes et externes lesquelles son relatives à l'appareil de fourniture d'énergie (2) et lesquelles sont momentanément configurées et/ou vérifiées par un utilisateur (N), au moyen d'une unité de génération de codes (2B) de l'appareil de fourniture d'énergie (2B), les données contextuelles internes comprenant des paramètres d'appareil susceptibles d'être configurées qui sont relatives à l'appareil de fourniture d'énergie (2), et les données contextuelles externes comprenant des données contextuelles spécifiques audit utilisateur ;
(b) produire (S2) le code spécifique au contexte, qui a été généré de manière dynamique, au moyen d'une unité de sortie (2E) de l'appareil de fourniture d'énergie (2), de manière à ce qu'il parvienne à un terminal mobile (3) d'un utilisateur (N) ;
(c) établir (S3) une connexion de données entre le terminal mobile (3) dudit utilisateur (N) et un serveur (6), après avoir déchiffré avec succès le code spécifique au contexte qui a été généré de manière dynamique, au moyen d'une unité de déchiffrage (3D) du terminal mobile (3) ;
et
(d) fournir (S4) des données d'information d'appareil pertinentes au moyen du serveur (6), leur pertinence se rapportant au contexte indiqué dans les données contextuelles.
